# EUROPÄISCHE PATENTSCHRIFT

(11) **EP 1 472 452 B1**
(45) Veröffentlichungstag und Bekanntmachung des Hinweises auf die Patenterteilung: **14.09.2011**
(21) Anmeldenummer: 02795040.1
(22) Anmeldetag: 23.12.2002
(51) Int. Cl.: F02M 51/06

(54) **BRENNSTOFFEINSPRITZVENTIL**
FUEL INJECTION VALVE
SOUPAPE D'INJECTION DE CARBURANT

(30) Priorität: 30.01.2002 DE 10203657
(43) Veröffentlichungstag der Anmeldung: 03.11.2004
(73) Patentinhaber: ROBERT BOSCH GMBH, 70442 Stuttgart (DE)
(72) Erfinder: STIER, Hubert, 71665 Vaihingen/Enz (DE); OKRENT, Elmar, 71686 Remseck (DE); DOEBLER, Ulrich, 71686 Remseck (DE)
(74) Vertreter: Körfer, Thomas
(86) Internationale Anmeldenummer: PCT/DE2002/004733
(87) Internationale Veröffentlichungsnummer: WO 2003/064847

(56) Entgegenhaltungen:
- EP-A- 0 477 400
- DE-A- 19 500 706
- DE-A- 19 642 441
- DE-C- 19 839 125

## Beschreibung

### Stand der Technik

Die Erfindung geht aus von einem Brennstoffeinspritzventil nach der Gattung des Hauptanspruchs.

Aus der EP 0 477 400 A1 ist ein Wegtransformator für einen piezoelektrischen Aktor bekannt, bei der der Aktor eine Hubkraft auf einen Geberzylinder überträgt, der durch einen Zylinderträger abgeschlossen ist. In diesem Geberzylinder wird ein Nehmerkolben geführt, der den Geberzylinder ebenfalls abschließt und hierdurch die Hydraulikkammer bildet. In der Hydraulikkammer ist eine Feder angeordnet, die den Geberzylinder und den Nehmerkolben auseinander drückt. Der Nehmerkolben überträgt eine Hubbewegung mechanisch auf beispielsweise eine Ventilnadel. Wenn der Aktor auf den Geberzylinder einen Hubbewegung überträgt, wird diese Hubbewegung durch den Druck eines Hydraulikfluids in der Hydraulikkammer auf den Nehmerkolben übertragen, da das Hydraulikfluid in der Hydraulikkammer sich nicht zusammenpressen läßt und nur ein ganz geringer Anteil des Hydraulikfluids durch den Ringspalt während des kurzen Zeitraumes eines Hubes entweichen kann. In der Ruhephase, wenn der Aktor keine Druckkraft auf den Geberzylinder ausübt, wird durch die Feder der Nehmerkolben aus dem Zylinder herausgedrückt und durch den entstehenden Unterdruck dringt über den Ringspalt das Hydraulikfluid in den Hydraulikraum ein und füllt diesen wieder auf. Dadurch stellt der Wegtransformator sich automatisch auf Längenausdehnungen und druckbedingte Dehnungen eines Brennstoffeinspritzventils ein.

Aus der Offenlegungsschrift DE 195 00. 706 A1 ist ein Zumessventil zur Dosierung von Flüssigkeiten oder Gasen bekannt. Bei dem Zumessventil zur Dosierung von Flüssigkeiten oder Gasen, insbesondere einem KraftstoffEinspritzventil für Brennkraftmaschinen, mit einem hydraulischen Wegverstärker zur Umsetzung des Stellwegs eines piezoelektrischen Aktors in einen vergrößerten Hub der Ventilnadel ist zur bauvolumenkleinen räumlichen Integration des Wegverstärkers in das Ventilgehäuse bei einem sog. A-Ventil der Hubkolben des Wegverstärkers mit einem im Durchmesser reduzierten Endabschnitt versehen, der in eine Ausnehmung Im Arbeitskolben des Wegverstärkers hineinragt. Eine in der von den Kolben begrenzten Verstärkerkammer einliegende Tellerfeder legt den Arbeitskolben an den Aktor an und eine in der Ausnehmung konzentrisch zum Endabschnitt angeordnete Schraubendruckfeder drückt den Hubkolben gegen die Ventilnadel.

Nachteilig an den aus den oben genannten Druckschriften bekannten Brennstoffeinspritzventilen ist insbesondere, daß die Vorspannung einer Feder, welche die Weite des Kopplerspaltes zwischen dem Geberzylinder und dem Nehmerkolben bestimmt, mittels einer Einstellscheibe erfolgt, welche in das Gehäuse des Brennstoffeinspritzventils eingelegt wird. Die Einstellscheibe ist bedingt durch ihre geringe Dicke zum einen verschleiß- und störungsanfällig, zum anderen kann sie große Fertigungsungenauigkeiten aufweisen, welche die korrekte Einstellung des Kopplerspalts erschweren.

### Vorteile der Erfindung

Das erfindungsgemäße Brennstoffeinspritzventil mit den kennzeichnenden Merkmalen des Hauptanspruchs hat demgegenüber den Vorteil, daß die Vorspannung der Feder mittels der Position des Führungszylinders relativ zum Gehäuse sehr genau einstellbar ist. Das Bauteil Einstellscheibe kann somit entfallen.

Zwischen dem Gehäuse (3) des Brennstoffeinspritzventils (1) und dem zweiten Flansh (11b) ist eine zweite Feder (13) so eingespannt, dass der Ventilschließkörper (14) ohne Betätigung des Aktors (2) an der Ventilsitzfläche (15) in Anlage gehalten wird.

Durch die in den Unteransprüchen aufgeführten Maßnahmen sind vorteilhafte Weiterbildungen und Verbesserungen des im Hauptanspruch angegebenen Brennstoffeinspritzventils möglich.

Die Feder ist vorzugsweise zwischen dem Führungszylinder und einem Flansch des Nehmerkolbens eingespannt. Dadurch ergibt sich eine besonders kompakte Bauweise des Brennstoffeinspritzventils.

Vorteilhafterweise ist der Führungszylinder mit dem Gehäuse zur Fixierung in geeigneter Weise beispielsweise durch Schweißen verbunden.

Weiterhin ist von Vorteil, daß die einfache Konstruktion des erfindungsgemäßen Brennstoffeinspritzventils die Verwendung von Brennstoff als Hydraulikfluid erlaubt, wodurch aufwendige Abdichtungsmaßnahmen entfallen können.

### Zeichnung

Ein Ausführungsbeispiel der Erfindung ist in der Zeichnung vereinfacht dargestellt und in der nachfolgenden Beschreibung näher erläutert. Es zeigt:

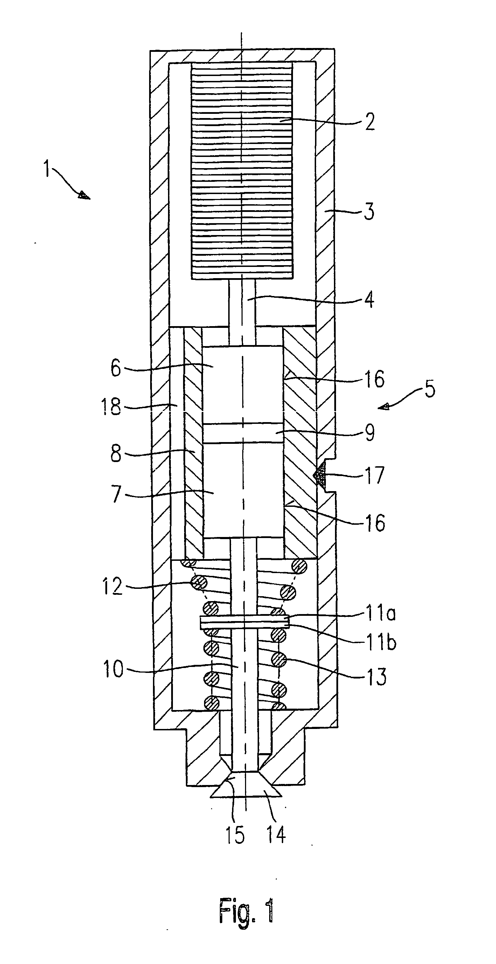

- Fig. 1: einen stark schematisierten Schnitt durch ein Ausführungsbeispiel eines erfindungsgemäßen Brennstoffeinspritzventils.

### Beschreibung des Ausführungsbeispiels

Fig. 1 zeigt in einer stark schematisierten Ansicht einen Schnitt durch ein Ausführungsbeispiel eines erfindungsgemäß ausgestalteten Brennstoffeinspritzventils 1. Das Brennstoffeinspritzventil 1 ist insbesondere zum direkten Einspritzen von Brennstoff in den Brennraum einer gemischverdichtenden, fremdgezündeten Brennkraftmaschine geeignet.

Das Brennstoffeinspritzventil 1 umfaßt einen piezoelektrischen oder magnetostriktiven Aktor 2, der in einem Gehäuse 3 gekapselt ist. Der Aktor 2 wirkt über ein Stellglied 4 auf einen hydraulischen Koppler 5 ein, welcher einen Geberkolben 6 und einen Nehmerkolben 7 aufweist. Der Geberkolben 6 und der Nehmerkolben 7 sind in einem Führungszylinder 8 geführt. Zwischen dem Geberkolben 6 und dem Nehmerkolben 7 ist ein Kopplerspalt 9 ausgebildet. Der Brennstoff wird durch einen Brennstoffkanal 18 an dem Führungszylinder 8 vorbei geführt.

Der hydraulische Koppler 5 kann dabei vorteilhaft zur Hubübersetzung des Aktors 2 verwendet werden, indem die Flächen des Geberkolbens 6 und des Nehmerkolbens 7 enstprechend aufeinander abgestimmt werden. Der Nehmerkolben 7 weist einen ersten Flansch 11a auf.

Abströmseitig des Nehmerkolbens 7 ist eine Ventilnadel 10 angeordnet, welche einen zweiten Flansch 11b aufweist. Zwischen dem ersten Flansch 11a und dem Führungszylinder 8 ist eine erste Feder 12 angeordnet, welche dafür sorgt, daß der Flansch 11a des Nehmerkolbens 7 an dem Flansch 11b der Ventilnadel 10 anliegt und der Kopplerspalt 9 eine definierte Weite erhält. Die erste Feder 12 ist dabei zwischen dem Führungszylinder 8 und dem ersten Flansch 11a eingespannt.

An der abstromseitigen Seite des zweiten Flansches 11b ist eine zweite Feder 13 angeordnet, welche einen mit der Ventilnadel 10 in Wirkverbindung stehenden Ventilschließkörper 14 in dichtender Anlage an einer an dem Gehäuse 3 ausgebildeten Ventilsitzfläche 15 hält. Die zweite Feder 13 ist dabei zwischen dem Gehäuse 3 und dem zweiten Flansch 11b eingespannt. Im Ausführungsbeispiel handelt es sich um ein nach außen öffnendes Brennstoffeinspritzventil 1.

Wenn an den Aktor 2 über eine nicht weiter dargestellte elektrische Zuleitung eine Spannung angelegt wird, übt der Aktor 2 durch seine Ausdehnung auf das Stellgleid 4 eine Hubbewegung aus, die sich weiter auf den Geberkolben 6 des Kopplers 5 überträgt. Der Geberkolben 6 wird in das Innere des Führungszylinders 8 gedrückt. Das Hydraulikfluid, im vorliegenden Ausführungsbeispiel Brennstoff, im Inneren des zwischen dem Geberkolben 6 und dem Nehmerkolben 7 ausgebildeten Kopplerspalts 9 ist fast nicht kompressibel.

Durch diese Inkompressibilität des Brennstoffs werden langsame Druckänderungen, welche durch Temperaturänderungen während des Betriebs der Brennkraftmaschine hervorgerufen werden, oder Längenänderungen des Gehäuses 3 durch Druck- und Temperatureinflüsse nicht auf die Ventilnadel 10 übertragen, sondern durch Verdrängung von Brennstoff aus dem Kopplerspalt 9 ausgeglichen.

Bei Erregung des Aktors 2 kommt es somit zu einem schnellen Druckanstieg, durch den sich der Nehmerkolben 7 im Führungszylinder 8 in Richtung der Ventilnadel 10 bewegt und auf diese eine Hubkraft ausübt. Durch einen zwischen dem Geberkolben 6 und dem Führungszylinder 8 bzw. zwischen dem Nehmerkolben 7 und dem Führungszylinder 8 zwangsläufig bestehenden Ringspalt 16 kann aufgrund der schnellen Ausdehnung des Aktors 2 nur eine geringe Menge Brennstoff aus dem Kopplerspalt 9 entweichen. Der Hub des Aktors 2 wird somit praktisch verlustfrei über die Flansche 11a, 11b auf die Ventilnadel 10 des Brennstoffeinspritzventils 1 übertragen, wodurch die Ventilnadel 10 in Abströmrichtung gedrückt wird und der Ventilschließkörper 14 von der Ventilsitzfläche 15 abhebt, wodurch das Brennstoffeinspritzventil 1 geöffnet wird.

Nach dem Abfallen der Spannung an dem Aktor 2 zieht dieser sich wieder zusammen, wodurch der hydraulische Koppler 5 entlastet wird. Durch die Kraft der Rückstellfeder 13 kehrt die Ventilnadel 10 in ihre Ausgangslage zurück, wodurch der Ventilschließkörper 14 auf der Ventilsitzfläche 15 aufsetzt und das Brennstoffeinspritzventil 1 geschlossen wird.

Gemäß dem Stand der Technik wird die Kraft der Feder 12, welche dem Erhalt des Kopplerspalts 9 dient, mittels einer Einstellscheibe eingestellt. Dieses Verfahren ist ungenau und mit einem zusätzlichen Bauteil verbunden.

Erfindungsgemäß wird daher der Führungszylinder 8 des hydraulischen Kopplers 5 bei der Monatge des Brennstoffeinspritzventils 1 in das Gehäuse 3 so weit eingeschoben, bis die gewünschte Federspannung der Feder 12 erreicht ist. Danach wird der Führungszylinder 8 mit dem Gehäuse 3 des Brennstoffeinspritzventils 1 an der Schweißnaht 17 verschweißt. Dies hat den Vorteil, daß die Einstellgenauigkeit nicht von einem Bauteil bestimmt wird, welches aufgrund seiner geringfügigen Dicke empfindlich gegenüber Verschleiß und nachfolgenden Störungen durch eine Änderung des Hubs ist und zudem hohe Fertigungsungenauigkeiten aufweisen kann.

Die Erfindung ist nicht auf das dargestellte Ausführungsbeispiel beschränkt und beispielsweise auch für Brennstoffeinspritzventile 1 für gemischverdichtende, selbstzündende Brennkraftmaschinen anwendbar.

## Patentansprüche

1. Brennstoffeinspritzventil (1) zum direkten Einspritzen von Brennstoff in den Brennraum einer Brennkraftmaschine, mit einem piezoelektrischen oder magnetostriktiven Aktor (2), der über einen hydraulischen Koppler (5) einen an einer Ventilnadel (10) angeordneten Ventilschließkörper (14) betätigt, der mit einer Ventilsitzfläche (15) zu einem Dichtsitz zusammenwirkt, wobei der Koppler (5) einen Führungszylinder (8) aufweist, in welchem ein Geberkolben (6) und ein Nehmerkolben (7) geführt sind, wobei zwischen dem Geberkolben (6) und dem Nehmerkolben (7) ein Kopplerspalt (9) ausgebildet ist, und einer ersten Feder (12), welche eine Vorspannkraft auf den Nehmerkolben (7) ausübt, wobei die Führungshülse (8) so ausgebildet ist, dass sie in einem Gehäuse (3) des Brennstoffeinspritzventils (1) vor ihrer Fixierung so verschiebbar ist, dass durch ihre Position die Kraft der ersten Feder (12) einstellbar ist,
**dadurch gekennzeichnet,**
**dass** der Nehmerkolben (7) einen ersten Flansch (11a) und die Ventilnadel (10) einen zweiten Flansch (llb) aufweist, wobei die erste Feder (12) so zwischen dem Führungszylinder (8) und dem ersten Flansch (11a) eingespannt ist, dass der erste Flansch (11a) an dem zweiten Flansch (llb) in Anlage gehalten wird und
**dass** zwischen dem Gehäuse (3) des Brennstoffeinspritzventils (1) und dem zweiten Flansch (llb) eine zweite Feder (13) so eingespannt ist, dass der Ventilschließkörper (14) ohne Betätigung des Aktors (2) an der Ventilsitzfläche (15) in Anlage gehalten wird.

2. Brennstoffeinspritzventil nach Anspruch 1,
**dadurch gekennzeichnet,**
**dass** als Hydraulikmedium, welches den Kopplerspalt (9) füllt, der das Brennstoffeinspritzventil (1) durchströmende Brennstoff dient.

3. Brennstoffeinspritzventil nach Anspruch 1 oder 2,
**dadurch gekennzeichnet,**
**dass** die Führungshülse (8) an dem Gehäuse (3) durch eine Schweißnaht (17) fixiert ist.

## Claims

1. Fuel injection valve (1) for the direct injection of fuel into the combustion chamber of an internal combustion engine, having a piezoelectric or magnetostrictive actuator (2) which actuates, via a hydraulic coupler (5), a valve closing body (14) which is arranged on a valve needle (10) and interacts with a valve seat face (15) to form a sealing seat, the coupler (5) having a guide cylinder (8), in which a master piston (6) and a slave piston (7) are guided, a coupler gap (9) being formed between the master piston (6) and the slave piston (7), and having a first spring (12) which exerts a prestressing force on the slave piston (7), the guide sleeve (8) being configured in such a way that, before it is fixed, it can be displaced in a housing (3) of the fuel injection valve (1) in such a way that the force of the first spring (12) can be set by its position, **characterized in that** the slave piston (7) has a first flange (11a) and the valve needle (10) has a second flange (11b), the first spring (12) being clamped in between the guide cylinder (8) and the first flange (11a) in such a way that the first flange (11a) is held in contact with the second flange (11b), and **in that** a second spring (13) is clamped in between the housing (3) of the fuel injection valve (1) and the second flange (11b) in such a way that the valve closing body (14) is kept in contact with the valve seat face (15) without actuation of the actuator (2).

2. Fuel injection valve according to Claim 1, **characterized in that** the fuel which flows through the fuel injection valve (1) serves as hydraulic medium which fills the coupler gap (9).

3. Fuel injection valve according to Claim 1 or 2, **characterized in that** the guide sleeve (8) is fixed on the housing (3) by a welded seam (17).

## Revendications

1. Soupape d'injection de carburant (1) pour l'injection directe de carburant dans la chambre de combustion d'un moteur à combustion interne, comprenant un actionneur piézoélectrique ou magnétorestrictif (2), qui actionne, par le biais d'un coupleur hydraulique (5), un corps de fermeture de soupape (14) disposé sur une aiguille de soupape (10), lequel coopère avec une surface de siège de soupape (15) pour former un ajustement étanche, le coupleur (5) présentant un cylindre de guidage (8) dans lequel sont guidés un maître-piston (6) et un piston récepteur (7), une fente d'accouplement (9) étant réalisée entre le maître-piston (6) et le piston récepteur (7), et un premier ressort (12), qui exerce une force de précontrainte sur le piston récepteur (7), le manchon de guidage (8) étant réalisé de telle sorte qu'il puisse être déplacé dans un boîtier (3) de la soupape d'injection de carburant (1) avant sa fixation, de telle sorte que par sa position, la force du premier ressort (12) puisse être ajustée,
**caractérisée en ce que**
le piston récepteur (7) présente une première bride (11a) et l'aiguille de soupape (10) présente une deuxième bride (11b), le premier ressort (12) étant serré entre le cylindre de guidage (8) et la première bride (11a) de telle sorte que la première bride (11a) soit maintenue en appui contre la deuxième bride (11b), et
**en ce qu'**entre le boîtier (3) de la soupape d'injection de carburant (1) et la deuxième bride (11b) est serré un deuxième ressort (13) de telle sorte que le corps de fermeture de soupape (14) soit maintenu en appui contre la surface de siège de soupape (15) sans actionnement de l'actionneur (2).

2. Soupape d'injection de carburant selon la revendication 1,
**caractérisée en ce que**
l'on utilise comme fluide hydraulique qui remplit la fente d'accouplement (9), le carburant parcourant la soupape d'injection de carburant (1).

3. Soupape d'injection de carburant selon la revendication 1 ou 2,
**caractérisée en ce que**
le manchon de guidage (8) est fixé sur le boîtier (3) par un cordon de soudure (17).
